# EUROPEAN PATENT APPLICATION

(11) **EP 4 235 535 A1**
(43) Date of publication of application: **30.08.2023**
(21) Application number: 23159214.8
(22) Date of filing: 28.02.2023
(51) Int. Cl.: G06Q 10/0631, G06Q 30/0283, G06Q 50/04

(54) **SYSTEMS AND METHODS FOR PREDICTING COMPONENT MANUFACTURING COSTS**

(30) Priority: 28.02.2022 US 202263314729 P
(71) Applicant: ATS Automation Tooling Systems Inc., Cambridge, Ontario N3H 4R7 (CA)
(72) Inventor: KLEINIKKINK, Stanley Wellington, Cambridge, N3H 4R7 (CA); BLAIR de VERTEUIL, Daniel, Cambridge, N3H 4R7 (CA); KHERADMANDI, Masoud, Cambridge, N3H 4R7 (CA)
(74) Representative: Brand Murray Fuller LLP

(57) **Abstract**

Computer-implemented methods and systems for predicting a cost estimate of a query manufactured component are provided. An example method involves operating at least one processor to: receive a query defining desired features for the query manufactured component; determine, using a predictive model, at least one cost estimate for the query manufactured component based on the query; and display, via a user interface, the at least one cost estimate for the query manufactured component. The desired features can include at least one of: a component type, a size, and a material for the query manufactured component.

## Description

### CROSS-REFERENCE TO RELATED APPLICATIONS

This application claims priority from U.S. Provisional Patent Application No. 63/314,729, filed on February 28, 2022, entitled "Systems and Methods for Predicting Component Manufacturing Costs". The entire contents of U.S. Provisional Patent Application No. 63/314,729 is hereby incorporated by reference for all purposes.

### FIELD

The described embodiments generally relate to system and methods for predicting manufacturing costs, and to systems and methods for generating a predictive model to predict a purchase cost of manufactured components.

### BACKGROUND

The following is not an admission that anything discussed below is part of the prior art or part of the common general knowledge of a person skilled in the art.

Automated production processes can assemble multiple manufactured components together to produce various products. However, mass production of such products can require large quantities of the manufactured components. Procurement of each manufactured component typically involves requesting price quotes from multiple third-party vendors, awaiting the price quotes from the third-party vendors, selecting one of the price quotes, submitting a purchase order to the selected third-party vendor, and then waiting for the third-party vendor to deliver the order. The procurement process may be repeated for each component and can be time-consuming, increase procurement costs and introduce delays. In some instances, it can be necessary to procure thousands of unique components at a time with varying price impactful scenarios, leading to delays in the supply chain quoting and ordering process.

### SUMMARY

The following introduction is provided to introduce the reader to the more detailed discussion to follow. The introduction is not intended to limit or define any claimed or as yet unclaimed invention. One or more inventions may reside in any combination or subcombination of the elements or process steps disclosed in any part of this document including its claims and figures.

In accordance with a broad aspect, there is provided a computer-implemented method for predicting a cost estimate of a query manufactured component. The method involves operating at least one processor to: receive a query defining desired features for the query manufactured component; determine, using a predictive model, at least one cost estimate for the query manufactured component based on the query; and display, via a user interface, the at least one cost estimate for the query manufactured component. The desired features can include at least one of: a component type, a size, and a material for the query manufactured component.

In at least one embodiment, the desired features can further include at least one of a finish, a heat treatment, a number of weldments, a mass, a surface area, a machining tolerance, a surface smoothness, a tread depth, a number of holes, a number of unique holes, a number of cuts, a number of finished corners, a blank size, a final volume, a number of markings, a volume of material removed, or a manufacturing process.

In at least one embodiment, operating the at least one processor to determine, using a predictive model, at least one cost estimate for the query manufactured component based on the query can involve operating the at least one processor to: assign the query manufactured component to a group of previously procured components having analogous features; and determine the at least one cost estimate for the query manufactured component based on one or more correlations of the group of previously procured components having analogous features.

In at least one embodiment, the method can further involve operating the at least one processor to: receive feature data associated with previously procured components; receive cost data associated with the previously procured components; determine a correlation between at least one feature and the unit cost; and train the predictive model with the feature data and the cost data associated with previously procured components having the at least one correlated feature to predict a unit cost of a component. The feature data for each previously procured component can be representative of one or more features for that previously procured component. The cost data for each previously procured component can be representative of a unit cost for that previously procured component.

In at least one embodiment, the method can further involve operating the at least one processor to extract the feature data from component design models of the previously procured components.

In at least one embodiment, each of the component design models can include image data defining a geometrical representation of the previously procured component. Operating the at least one processor to extract the feature data from the component design models can involve operating the at least one processor to determine a size for the previously procured component from the image data.

In at least one embodiment, the method can further involve operating the at least one processor to determine a final volume of the previously procured component based on the size of the previously procured component.

In at least one embodiment, each of the component design models comprise text data defining one or more physical properties of the previously procured component. Operating the at least one processor to extract the feature data from the component design models can involve operating the at least one processor to obtain at least one of a material type, a finish, a heat treatment, a number of weldments, a component type, a mass, a surface area, a machining tolerance, a surface smoothness, a tread depth, a number of holes, a number of unique holes, a number of cuts, a number of finished corners, a blank size, a final volume, a number of markings, or a manufacturing process for the previously procured component from the text data.

In at least one embodiment, the method can further involve operating the at least one processor to determine a volume of material removed based on the blank size and one or more of the number of holes, the number of cuts, the number of finished corners, or the number of markings.

In at least one embodiment, operating the at least one processor to train the predictive model based on the feature data and the cost data associated with the previously procured components having the at least one type of feature can involve operating the at least one processor to: train the predictive model using an initial data set; identify at least one of a data outlier or a critical data point within the initial data set; revise the initial data set based on the data outlier or the critical data point to obtain a revised data set; and retrain the predictive model using the revised data set. The initial data set can include the feature data and the cost data associated with the previously procured components having the at least one correlated feature.

In at least one embodiment, the data outlier can include a previously procured component of the previously procured components. Operating the at least one processor to revise the initial data set can involve operating the at least one processor to, in response to identifying a data outlier within the initial data set: identify feature data and cost data associated with the previously procured component identified as a data outlier; and remove, from the initial data set, the feature data and cost data associated with the data outlier.

In at least one embodiment, the critical data point can include feature data of previously procured components having a critical feature. Operating the at least one processor to revise the initial data set can involve operating the at least one processor to, in response to identifying a critical data point within the initial data set: extract additional feature data associated with additional previously procured components having the critical feature; extract additional cost data from one or more procurement records for the additional previously procured components; and aggregate the additional feature data and additional cost data with the initial data set to obtain the revised data set.

In at least one embodiment, the method can further involve operating the at least one processor to: determine an initial prediction accuracy indicator of the predictive model based on the initial data set; and determine a revised prediction accuracy indicator of the predictive model based on the revised data set.

In at least one embodiment, operating the at least one processor to determine a correlation between at least one correlated feature and the unit cost can involve operating the at least one processor to, for each previously procured component: identify a feature type associated with each feature data of the previously procured component; and assign the previously procured component to one or more feature groups having analogous features. The at least one processor can be operated to, for each feature group of the one or more feature groups: determine an association between the feature data of the previously procured components assigned to the feature group and the unit cost; determine whether the association satisfies a pre-determined criterion; and if the association satisfies the pre-determined criterion, identify the association as a correlation between the feature and the unit cost.

In at least one embodiment, the query can further include one or more procurement attributes. The one or more procurement attributes can include at least one of a desired quantity size, a desired lead time, or a desired geographical delivery region. Operating the at least one processor to determine the at least one cost estimate for the query manufactured component based on the query can be further based on the one or more procurement attributes.

In at least one embodiment, the method can further involve operating the at least one processor to: receive procurement data associated with previously procured components; determine a correlation between at least one procurement attribute and the unit cost; and train the predictive model with the procurement data and the cost data associated with previously procured components having the at least one procurement attribute to predict a unit cost of a component. The procurement data for each previously procured component can be representative of one or more procurement attributes of the previously procured component.

In at least one embodiment, the method can further involve operating the at least one processor to extract the procurement data and the cost data from one or more procurement records for the previously procured component. The procurement data can include at least one of a procured quantity, an order date, a delivery date, a vendor identifier, or a delivery location. If the procurement data includes a procured quantity, the at least one processor can determine a procured quantity size from the procured quantity. If the procurement data includes an order date and a delivery date, the at least one processor can determine a procurement lead time. If the procurement data includes a vendor identifier, the at least one processor can determine a geographical region of manufacture from the vendor identifier. If the procurement data includes a delivery location, the at least one processor can determine a procurement geographical delivery region from the delivery location.

In at least one embodiment, the method can further involve operating the at least one processor to receive an actual price quote associated with the query manufactured component; and update the predictive model with the actual price quote.

In at least one embodiment, the method can further involve operating the at least one processor to: identify one or more previously procured components having features corresponding to the desired features for the query manufactured component as potential components corresponding to the query; and display, via the user interface, a visual representation of the one or more potential components corresponding to the query.

In at least one embodiment, the method can further involve operating the at least one processor to: identify an alternative component having same desired features as the query manufactured component except one or more alternative features; determine, using the predictive model, a cost estimate for the alternative component; and display, via the user interface, the alternative component and the cost estimate of the alternative component.

In at least one embodiment, if the cost estimate for the alternative component is lower than each of the at least one cost estimates for the query manufactured component, the method can involve operating the at least one processor to display the alternative component as a substitute component. Otherwise, if a difference between the cost estimate of the alternative component and a cost estimate of the query manufactured component is less than a pre-determined threshold, the method can involve operating the at least one processor to display the alternative component as an upgraded component.

In at least one embodiment, the one or more alternative features can include an alternative dimension, an alternative material type, an alternative machining tolerance, an alternative manufacturing process, or an alternative material traceability.

In at least one embodiment, the method can further involve operating the at least one processor to: determine, using the predictive model, an estimated delivery date of the query manufactured component; and display, via the user interface, a timeline for delivery of the query manufactured component.

In at least one embodiment, the method can further involve operating the at least one processor to recommend a vendor for manufacturing the query manufactured component based on at least one of the cost estimate for that vendor or the estimated delivery date for that vendor.

In at least one embodiment, the method can further involve operating the at least one processor to: receive supplementary data comprising at least one of inflation data, commodity cost data, labor cost data, currency data, vendor load data, or shipping cost data; and determine at least one updated cost estimate based on the supplementary data.

In at least one embodiment, the method can further involve operating the at least one processor to: evaluate a confidence indicator for each of the at least one cost estimates; and display, via the user interface, the confidence indicators.

In at least one embodiment, the method can further involve operating the at least one processor to: determine whether the predictive model can predict the at least one cost estimate for the query manufactured component based on the query; and if the predictive model cannot predict the at least one cost estimate, display, via the user interface, a notification of a non-prediction.

In at least one embodiment, the query can include a query workpiece and the query workpiece can include a plurality of query manufactured components. The method can further involve operating the at least one processor to determine at least one cost estimate for the query workpiece based on cost estimates for each query manufactured component of the plurality of query manufactured components.

In at least one embodiment, the method can further involve operating the at least one processor to determine a number of fasteners required to assemble the query workpiece using the plurality of query manufactured components.

In at least one embodiment, the method can further involve operating the at least one processor to determine a list of materials required to assemble the query workpiece.

In at least one embodiment, the method can further involve operating the at least one processor to determine a total mass of the query workpiece.

An example non-transitory computer-readable medium including instructions executable on a processor can implement any one of the methods disclosed herein.

In accordance with another broad aspect, there is provided a system for predicting a cost estimate of a query manufactured component. The system can include at least one processor and a user interface in communication with the at least one processor. The at least one processor can be operable to receive a query defining desired features for the query manufactured component; and determine, using a predictive model, at least one cost estimate for the query manufactured component based on the query. The desired features can include at least one of: a component type, a size, and a material for the query manufactured component. The user interface can be configured to display the at least one cost estimate for the query manufactured component.

In at least one embodiment, the desired features can further include at least one of a finish, a heat treatment, a number of weldments, a mass, a surface area, a machining tolerance, a surface smoothness, a tread depth, a number of holes, a number of unique holes, a number of cuts, a number of finished corners, a blank size, a final volume, a number of markings, a volume of material removed, or a manufacturing process.

In at least one embodiment, the at least one processor being operable to determine, using a predictive model, a cost estimate for the query manufactured component based on the query can include the at least one processor being operable to: assign the query manufactured component to a group of previously procured components having analogous features; and determine the at least one cost estimate for the query manufactured component based on one or more correlations of the group of previously procured components having analogous features.

In at least one embodiment, the at least one processor can be further operable to: receive feature data associated with previously procured components; receive cost data associated with the previously procured components; determine a correlation between at least one feature and the unit cost; and train the predictive model with the feature data and the cost data associated with previously procured components having the at least one correlated feature to predict a unit cost of a component. The feature data for each previously procured component can be representative of one or more features for that previously procured component. The cost data for each previously procured component being representative of a unit cost for that previously procured component.

In at least one embodiment, the at least one processor can be further operable to extract the feature data from component design models of the previously procured components.

In at least one embodiment, each of the component design models can include image data defining a geometrical representation of the previously procured component. The at least one processor being operable to extract the feature data from the component design models can include the at least one processor being operable to determine a size, for the previously procured component from the image data.

In at least one embodiment, the at least one processor can be further operable to determine a final volume of the previously procured component based on the size of the previously procured component.

In at least one embodiment, each of the component design models comprise text data defining one or more physical properties of the previously procured component. The at least one processor being operable to extract the feature data from the component design models can include the at least one processor being operable to obtain at least one of a material type, a finish, a heat treatment, a number of weldments, a component type, a mass, a surface area, a machining tolerance, a surface smoothness, a tread depth, a number of holes, a number of unique holes, a number of cuts, a number of finished corners, a blank size, a final volume, a number of markings, or a manufacturing process for the previously procured component from the text data.

In at least one embodiment, the at least one processor can be further operable to determine a volume of material removed is based on of the blank size and one or more of the number of holes, the number of cuts, the number of finished corners, or the number of markings.

In at least one embodiment, the at least one processor being operable to train the predictive model based on the feature data and the cost data associated with the previously procured components having the at least one type of feature can include the at least one processor being operable to: train the predictive model using an initial data set; identify at least one of a data outlier or a critical data point within the initial data set; revise the initial data set based on the data outlier or the critical data point to obtain a revised data set; and retrain the predictive model using the revised data set. The initial data set can include the feature data and the cost data associated with the previously procured components having the at least one correlated feature.

In at least one embodiment, the data outlier can include a previously procured component of the previously procured components. The at least one processor being operable to revise the initial data set can include the at least one processor being operable to, in response to identifying a data outlier within the initial data set, identify feature data and cost data associated with the previously procured component identified as a data outlier; and remove, from the initial data set, the feature data and cost data associated with the data outlier.

In at least one embodiment, the critical data point can include feature data of previously procured components having a critical feature. The at least one processor operable to revise the initial data set can include the at least one processor being operable to, in response to identifying a critical data point within the initial data set, extract additional feature data associated with additional previously procured components having the critical feature; extract additional cost data from one or more procurement records for the additional previously procured components; and aggregate the additional feature data and additional cost data with the initial data set to obtain the revised data set.

In at least one embodiment, the at least one processor can be further operable to: determine an initial prediction accuracy indicator of the predictive model based on the initial data set; and determine a revised prediction accuracy indicator of the predictive model based on the revised data set.

In at least one embodiment, the at least one processor being operable to determine a correlation between at least one correlated feature and the unit cost can include the at least one processor being operable to, for each previously procured component: identify a feature type associated with each feature data of the previously procured component; and assign the previously procured component to one or more feature groups having analogous features. For each feature group of the one or more feature groups, the at least one processor can be operable to determine an association between the feature data of the previously procured components assigned to the feature group and the unit cost; determine whether the association satisfies a pre-determined criterion; and, if the association satisfies the pre-determined criterion, identify the association as a correlation between the feature and the unit cost.

In at least one embodiment, the query further can include one or more procurement attributes. The one or more procurement attributes can include at least one of a desired quantity size, a desired lead time, or a desired geographical delivery region. The at least one processor being operable to determine the at least one cost estimate for the query manufactured component based on the query can be further based on the one or more procurement attributes.

In at least one embodiment, the at least one processor can be further operable to: receive procurement data associated with previously procured components; determine a correlation between at least one procurement attribute and the unit cost; and train the predictive model with the procurement data and the cost data associated with previously procured components having the at least one procurement attribute to predict a unit cost of a component. The procurement data for each previously procured component being representative of one or more procurement attributes of the previously procured component.

In at least one embodiment, the at least one processor can be further operable to: extract the procurement data and the cost data from one or more procurement records for the previously procured component. The procurement data can include at least one of a procured quantity, an order date, a delivery date, a vendor identifier, or a delivery location. If the procurement data includes a procured quantity, the at least one processor can determine a procured quantity size from the procured quantity. If the procurement data comprises an order date and a delivery date, the at least one processor can determine a procurement lead time. If the procurement data comprises a vendor identifier, the at least one processor can determine a geographical region of manufacture from the vendor identifier. If the procurement data comprises a delivery location, the at least one processor can determine a procurement geographical delivery region from the delivery location.

In at least one embodiment, the at least one processor can be further operable to: receive an actual price quote associated with the query manufactured component; and update the predictive model with the actual price quote.

In at least one embodiment, the at least one processor can be further operable to identify one or more previously procured components having features corresponding to the desired features for the query manufactured component as potential components corresponding to the query. The user interface can be further configured to display a visual representation of the one or more potential components corresponding to the query.

In at least one embodiment, the at least one processor can be further operable to: identify an alternative component having same desired features as the query manufactured component except one or more alternative features; determine, using the predictive model, a cost estimate for the alternative component; and display, via the user interface, the alternative component and the cost estimate of the alternative component.

In at least one embodiment, if the cost estimate for the alternative component is lower than each of the cost estimates for the query manufactured component, the at least one processor can be operable to display the alternative component as a substitute component. Otherwise, if a difference between the cost estimate of the alternative component and a cost estimate of the query manufactured component is less than a pre-determined threshold, the at least one processor can be operable to display the alternative component as an upgraded component.

In at least one embodiment, the one or more substitute features can include an alternative dimension, an alternative material type, an alternative machining tolerance, an alternative manufacturing process, or an alternative material traceability.

In at least one embodiment, the at least one processor can be further operable to: determine, using the predictive model, an estimated delivery date of the query manufactured component; and present, to the user, via the user interface, a timeline for delivery of the query manufactured component.

In at least one embodiment, the at least one processor can be further operable to: recommend a vendor for manufacturing the query manufactured component based on at least one of the cost estimate for that vendor or the estimated delivery date for that vendor.

In at least one embodiment, the at least one processor can be further operable to: receive supplementary data comprising at least one of inflation data, commodity cost data, labor cost data, currency data, vendor load data, or shipping cost data; and determine at least one updated cost estimate based on the supplementary data.

In at least one embodiment, the at least one processor can be further operable to: evaluate a confidence indicator for each of the at least one cost estimates; and display, to the user, via the user interface, the confidence indicators.

In at least one embodiment, the at least one processor can be further operable to: determine whether the predictive model can predict the at least one cost estimate for the query manufactured component based on the query; and if the predictive model cannot predict the at least one cost estimate, display, via the user interface, a notification of a non-prediction.

In at least one embodiment, the query can include a query workpiece and the query workpiece can include a plurality of query manufactured components. The at least one processor can be further operable to determine at least one cost estimate for the query workpiece based on cost estimates for each query manufactured component of the plurality of query manufactured components.

In at least one embodiment, the at least one processor can be further operable to determine a number of fasteners required to assemble the query workpiece using the plurality of query manufactured components.

In at least one embodiment, the at least one processor can be further operable to determine a list of materials required to assemble the query workpiece.

In at least one embodiment, the at least one processor can be further operable to determine a total mass of the query workpiece.

### BRIEF DESCRIPTION OF THE DRAWINGS

Several embodiments will be described in detail with reference to the drawings, in which:
FIG. 1 is a block diagram of components interacting with an example component management system, in accordance with at least one embodiment;
FIG. 2 is a flowchart of an example method of predicting a cost estimate of a manufactured component, in accordance with at least one embodiment;
FIG. 3 is a flowchart of an example method of generating a predictive model for predicting cost estimates of a manufactured component, in accordance with at least one embodiment;
FIG. 4 is a flowchart of an example method of training a predictive model to predict cost estimates of a manufactured component, in accordance with at least one embodiment;
FIG. 5A is schematic diagram of data sources for training the predictive model, in accordance with at least one embodiment;
FIG. 5B is an example of a portion of a component design model, in accordance with at least one embodiment;
FIG. 6 is a schematic diagram of an example architecture of a predictive model for predicting cost estimates of a manufactured component, in accordance with at least one embodiment; and
FIG. 7 is an example data used in the method of FIG. 3, in accordance with at least one embodiment.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### DESCRIPTION OF EXAMPLE EMBODIMENTS

Various systems or methods will be described below to provide an example of an embodiment of the claimed subject matter. No embodiment described below limits any claimed subject matter and any claimed subject matter may cover methods or systems that differ from those described below. The claimed subject matter is not limited to systems or methods having all of the features of any one system or method described below or to features common to multiple or all of the apparatuses or methods described below. It is possible that a system or method described below is not an embodiment that is recited in any claimed subject matter. Any subject matter disclosed in a system or method described below that is not claimed in this document may be the subject matter of another protective instrument, for example, a continuing patent application, and the applicants, inventors or owners do not intend to abandon, disclaim or dedicate to the public any such subject matter by its disclosure in this document.

Engineering and procurement are often separate functions. For example, engineering can design a component with various features and specifications, such as but not limited to material of construct, surface finish, manufacturing method or technology, tolerance, and quality criteria. Such features and specifications are captured in mechanical drawings. Based on the mechanical drawings, procurement can then source the components at various quantities, countries of origin, delivery time frames, scope of supply responsibility etc. Procurement of such manufactured components can be time-consuming, increase costs, and introduce delays in delivery of the component, especially when revisited with various scenarios, quantities, and time frames. Furthermore, when such components are intended for a final product, the costs and delays for the final product can be further compounded.

Such costs and delays may be avoided or reduced by considering procurement during engineering. However, engineering generally does not have the ability to search mechanical drawings based on design context or drawing text.

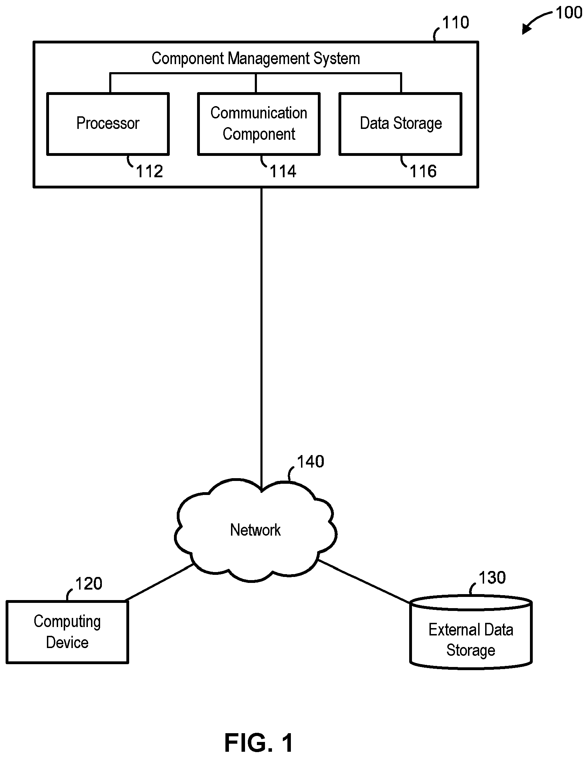

Referring to FIG. 1, there is shown a block diagram 100 of components interacting with an example component management system 110. As shown in FIG. 1, the component management system 110 is in communication with a computing device 120 and an external data storage 130 via a network 140.

The component management system 110 includes a processor 112, a communication component 114, and a data storage 116. The component management system 110 can be provided on one or more computer servers that may be distributed over a wide geographic area and connected via the network 140.

The component management system 110 can perform various functions related to component management, including engineering, design, and procurement. For example, the component management system 110 can receive data, such as component design models (e.g., three-dimensional computer-aided design (CAD) models, mechanical or electrical drawings, part properties) and corresponding procurement records. Such component design models and procurement records can be received from a computing device, such as computing device 120, and/or a data storage, such as external data storage 130. Based on the component design models and the procurement records, the component management system 110 can generate a predictive model for predicting at least one cost estimate of a query manufactured component. The component management system 110 can receive a query defining a component to be manufactured and predict at least one cost estimate for that component.

In some embodiments, the query can relate to a manufactured component which can be used in the fabrication or assembly of a larger item, which can be a structure, a device, or any other workpiece. A manufactured component can also be formed by subtractive, additive, or other alternative manufacturing processes. With subtractive manufacturing processes, a component can be cut from a blank. For example, material can be removed from a blank to form the component having a particular shape and size. With additive manufacturing processes. a component can be formed by adding, layers upon layers of material to form the component having a particular shape and size. Three-dimensional (3D) printing is an example of additive manufacturing.

Examples of manufactured components can include but are not limited to anchors, backings, bars, bases, blocks, brackets, bumpers, bushings, buttons, cables, caps, clamps, clips, connectors, covers, cylinders, dowels, fingers, flags, guards, guides, gussets, hangers, holders, hubs, inserts, locators, lugs, manifolds, mounts, pins, plates, probes, screw rests, sensors, shields, shims, spacers, stiffeners, stoppers, suction cups, tags, washers, and wedges.

In some embodiments, the query can relate to the workpiece. That is, the query can define a workpiece that includes multiple manufactured components. For example, the workpiece can be an electrical panel or another device.

In some embodiments, the component management system 110 can receive the query from via a computing device, such as computing device 120, and cause the predicted cost estimates to be displayed at the computing device 120.

The processor 112, the communication component 114, and the data storage 116 can be combined into a fewer number of components or can be separated into further components. In some cases, one or more of the components may be distributed over a wide geographic area. The processor 112, the communication component 114, and the data storage 116 may be implemented in software or hardware, or a combination of software and hardware.

The processor 112 can operate to control the operation of the component management system 110. The processor 112 can initiate and manage the operations of each of the other components within the component management system 110. The processor 112 may be any suitable processors, controllers, digital signal processors graphics processing unit, application specific integrated circuits (ASICs), and/or field programmable gate arrays (FPGAs) that can provide sufficient processing power depending on the configuration, purposes and requirements of the component management system 110. In some embodiments, the processor 112 can include more than one processor with each processor being configured to perform different dedicated tasks. The processor 112 can execute various instructions stored in the data storage 116 to implement the various component management methods described herein.

The communication component 114 may include any interface that enables the component management system 110 to communicate with other devices and systems. In some embodiments, the communication component 114 can include at least one of a serial port, a parallel port or a USB port. The communication component 114 may also include an interface to a component via one or more of a Bluetooth, WIFI, Internet, Local Area Network (LAN), Ethernet, Firewire, modem, fiber, or digital subscriber line connection. Various combinations of these elements may be incorporated within the communication component 114. The communication component 114 can be used to communicate with the computing device 120, for example, to receive a query for a cost estimate, or to transmit the cost estimate.

For example, the communication component 114 may receive input from various input devices, such as a mouse, a keyboard, a touch screen, a thumbwheel, a track-pad, a track-ball, a card-reader, voice recognition software and the like depending on the requirements and implementation of the component management system 110.

The data storage 116 can include RAM, ROM, one or more hard drives, one or more flash drives or some other suitable data storage elements such as disk drives, etc. The data storage 116 can store various data collected from the user, such as data defining manufactured components, and data generated by the component management system 110, such as cost estimates for manufactured components. The data storage 116 can also store data used to train the predictive model, such as but not limited to feature data and cost data. The data storage 116 can also store instructions that can be executed by the processor 112 to implement the various component management methods described herein.

Similar to the data storage 116, the external data storage 130 can also include RAM, ROM, one or more hard drives, one or more flash drives or some other suitable data storage elements such as disk drives, etc. In some embodiments, the external data storage 130 can be similar to the data storage 116 but located remotely from the component management system 110 and accessible via the network 140. The external data storage 130 can also include one or more databases (not shown) for storing information relating to manufactured components, such as feature data and cost data, including but not limited to cost estimates. Furthermore, the external data storage 130 can store data sources from which feature data and cost data can be extracted. For example, the external data storage 130 can store component design models, which can include three-dimensional computer-aided design models, mechanical drawings, electrical drawings, component data (e.g., parts properties data, product lifecycle management (PLM) system data). The external data storage 130 can also store procurement records. In some embodiments, the external data storage 130 may also store additional data, such as but not limited to, vendor load data, inflation data, currency data, commodity data, shipping cost data, and labor cost data. The external data storage 130 can store various data associated with the operation of the component management system 110, similar to the data storage 116.

The computing device 120 can include any networked device operable to connect to the network 140. A networked device is a device capable of communicating with other devices through a network such as the network 140. A networked device may couple to the network 140 through a wired or wireless connection. Although only one computing device 120 is shown in FIG. 1, it will be understood that more computing devices 120 can connect to the network 140.

The computing device 120 may include at least a processor and memory, and may be an electronic tablet device, a personal computer, workstation, server, portable computer, mobile device, personal digital assistant, laptop, smart phone, WAP phone, an interactive television, video display terminals, gaming consoles, and portable electronic devices or any combination of these.

The network 140 may be any network capable of carrying data, including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX, Ultra-wideband, Bluetooth^{®}), SS7 signaling network, fixed line, local area network, wide area network, and others, including any combination of these, capable of interfacing with, and enabling communication between, the component management system 110, the computing device 120 and the external data storage 130.

It will be understood that some components of FIG. 1, such as components of the component management system 110 or the external data storage 130, can be implemented in a cloud computing environment.

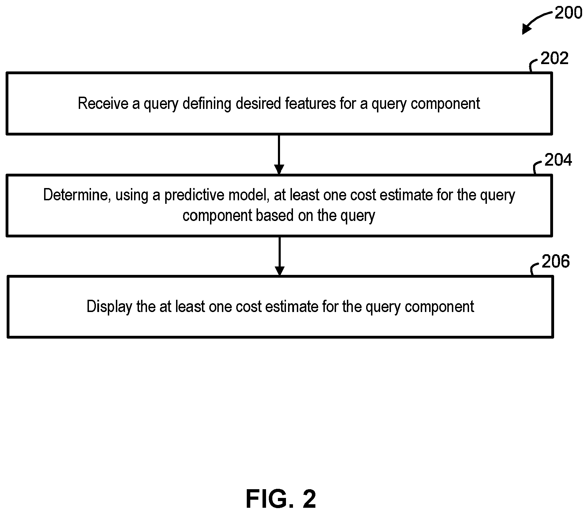

Referring now to FIG. 2, an example method 200 of predicting a cost estimate of a manufactured component is shown in a flowchart diagram. To assist with the description of the method 200, reference will be made simultaneously to FIG. 1. A component management system, such as component management system 110 having a processor 112 can be configured to implement method 200.

Method 200 can begin at 202. The processor 112 can receive a query for a cost estimate of a query manufactured component. The query can be received from a computing device, such as computing device 120. The query can define desired features for the query manufactured component. The desired features can include a component type, a size, and a material type from which the component is formed. The component type can define a general shape for the component. The size can relate to the outer dimensions of the component, such as a length, width, and height. For example, a query can define a component as being a mount component type, the size is 165 mm x 120 mm x 7 mm, and the desired material is 6061-T6 Aluminum.

The query can also define additional desired features or physical properties for the query manufactured component, such as but not limited to a finish, a heat treatment, a number of weldments, a component type, a mass, a surface area, a machining tolerance, a surface smoothness, a tread depth, a number of holes, a number of unique holes, a number of cuts, a number of finished corners, a blank size (e.g., length, width, and height dimensions), a final volume, a number of markings (e.g., part number markings or other identifiers), a volume of material removed, a manufacturing process (e.g., subtractive or additive), or any combination of these physical properties for the previously procured component. For example, a query can specify that the component has a clear anodize finish, no heat treatment, and a surface smoothness of 3.2 mm roughness average (Ra).

In some embodiments, the processor 112 can determine one or more of the desired features based on the desired features defined in the query. For example, in some embodiments, the processor 112 can determine a number of holes or a number of unique holes for the query manufacturing component based on the component type defined in the query. The processor 112 can determine a blank size based on the component type and size defined in the query. The processor 112 can determine a mass based on the component type, size, material type, and a number of holes defined in the query. In some embodiments, the processor 112 can generate a geometrical representation of the query component based on the desired features defined in the query to be displayed at the computing device 120.

It will be appreciated that the desired features defined in queries can vary. For example, a query can define a component type, a size, a material type, and a manufacturing process for the query manufactured component without defining a heat treatment or a machine tolerance. The processor 112 can determine a plurality of cost estimates for the query manufactured component having the desired features (i.e., component type, size, material type, and manufacturing process) with different heat treatments (e.g., none or stress relief) and machine tolerances. In another example, the processor 112 can determine a plurality of cost estimates for the query manufactured component having the desired features In at least one embodiment, the processor 112 can display a range of cost estimates based on the plurality of cost estimates.

In some embodiments, the processor 112 can select a default feature that is not defined in the query. For example, the query can define a component type, a size, a material type for the query manufactured component without defining a manufacturing process or a heat treatment. The processor 112 can select a default manufacturing process and heat treatment for the query manufactured component, such as subtractive manufacturing and no heat treatment. In at least one embodiment, the selection of a default feature can be based on most common or conventional features. In at least one embodiment, the selection of a default feature can be further based on the desired features defined in the query. For example, the default manufacturing process for a particular component type can be different for a different component type.

When the query relates to a query workpiece, the processor 112 can determine various additional features of the query workpiece. For example, the processor 112 can determine a number of fasteners required to assemble the query workpiece using the plurality of query manufactured components or a list of materials required to assemble the query workpiece. The processor 112 can determine at least one cost estimate for the query workpiece based on cost estimates for each of the plurality of manufactured components in the query workpiece.

The query can also define procurement attributes of the query manufactured component. The procurement attributes can relate to a desired quantity size, a desired lead time, a desired geographical delivery region, a desired geographical manufacturing region, a desired lead time, or any combination of these. These factors can affect the purchase cost estimate and the specification of these factors in the query can generate a more accurate prediction.

In some embodiments, the desired features of the query can be received via user input at the computing device 120. In some embodiments, at least a portion of the desired features of the query can be obtained from a component design model of the query manufactured component. That is, the processor 112 can receive a component design model of the query manufactured component and process the component design model of the query manufactured component to obtain the desired features for the query manufactured component. In some embodiments, an initial set of features can be obtained from a component design model of a similar component and further modified via user input at the computing device 120 to obtain the desired features for the query manufactured component.

At 204, the processor 112 can determine, using a predictive model, at least one cost estimate for the query manufactured component based on the query. That is, the processor 112 can implement one or more machine learned predictive models to predict a cost estimate for a manufactured component. The predictive models can be any suitable artificial intelligence (Al) models that are trained to make such predictions. Various types of training methods can be used to generate the predictive models, such as support vector machines, linear regression, logistic regression, naive Bayes, linear discriminant analysis, decision trees, k-nearest neighbor algorithms, cross-validation techniques such as k-fold validation, neural networks, similarity learning, polynomials with ridge estimators, polynomial with linear estimators, and the like. The training can be supervised or unsupervised.

In some embodiments, the processor 112 can assign the query manufactured component to a group of previously procured components having analogous features. The processor 112 can determine cost estimates for the query manufactured component based on one or more correlations to the group.

For example, previously procured components can relate to mounts having a hard anodized finish and mounts clear anodized finish. A query directed to a mount with a hard anodized finish can be assigned to the group representative of the previously procured mounts having a hard anodized finish. The processor 112 can determine the cost estimate for the mount with a hard anodized finish based on one or more correlations of the group to the unit cost.

Furthermore, the query may be directed to a mount having a relatively large size. As such, the query can be assigned to a group representative of previous procured mounts having a hard anodized finish and a similar, relatively large size.

It will be appreciated that in some embodiments, a query can relate to a component having a combination of features that have not been previously procured. In such cases, the query can be assigned to a group having most similar features. For example, the query can be directed to a mount, with a hard anodized finish, having a relatively large size, and heat treated. However, no such component has previously been procured. The query can be assigned to a first group representative of previously procured mounts, with a hard anodized finish, having a relatively large size, and not heat treated, and a second group representative of previously procured mounts, with a clear anodized finish, having a relatively large size, and heat treated.

In some embodiments, the processor 112 can also assign the query manufactured component to a group of previously procured components having analogous features. The processor 112 can determine the at least one cost estimate for the query manufactured component based on one or more correlations to the group. For example, previously procured components can relate to mounts having a hard anodized finish and mounts clear anodized finish. A query directed to a mount with a hard anodized finish can be assigned to the group representative of the previously procured mounts having a hard anodized finish. Furthermore, the query may be directed to a mount having a relatively large size. As such, the query can be assigned to a group representative of previous procured mounts having a hard anodized finish and a similar, relatively large size.

In some embodiments, the processor 112 can further assign the query manufactured component to a group of previously procured components having analogous procurement attributes. The processor 112 can determine the at least one cost estimate for the query manufactured component based on one or more correlations to the group.

At 206, the processor 112 can present the at least one cost estimate via a user interface. For example, the processor 112 can cause the at least one cost estimate to be displayed at computing device 120.

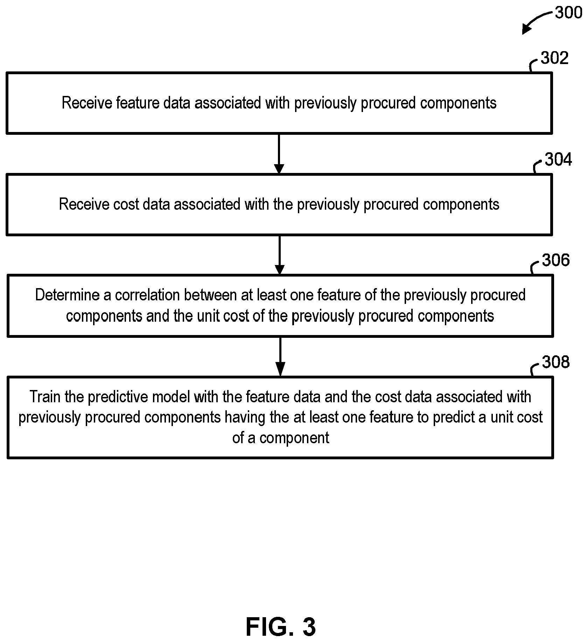

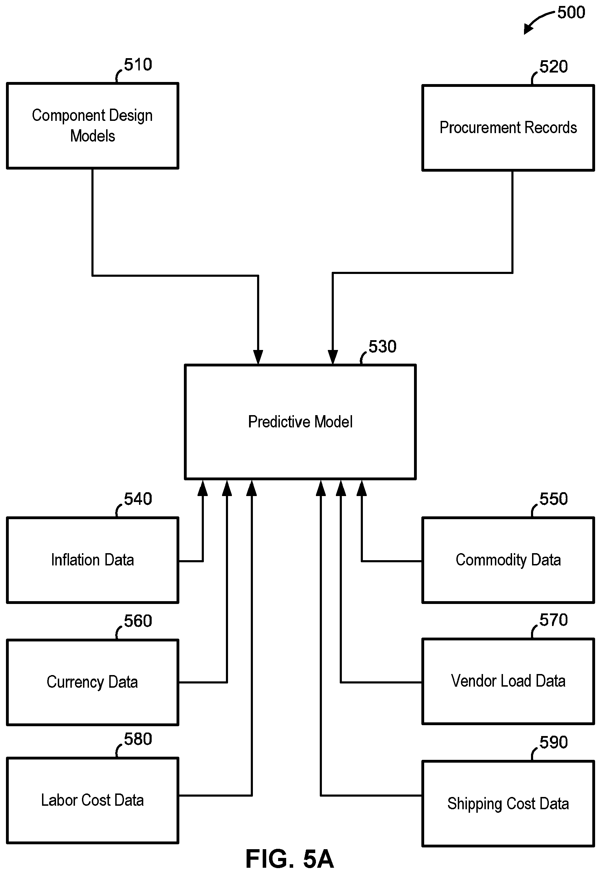

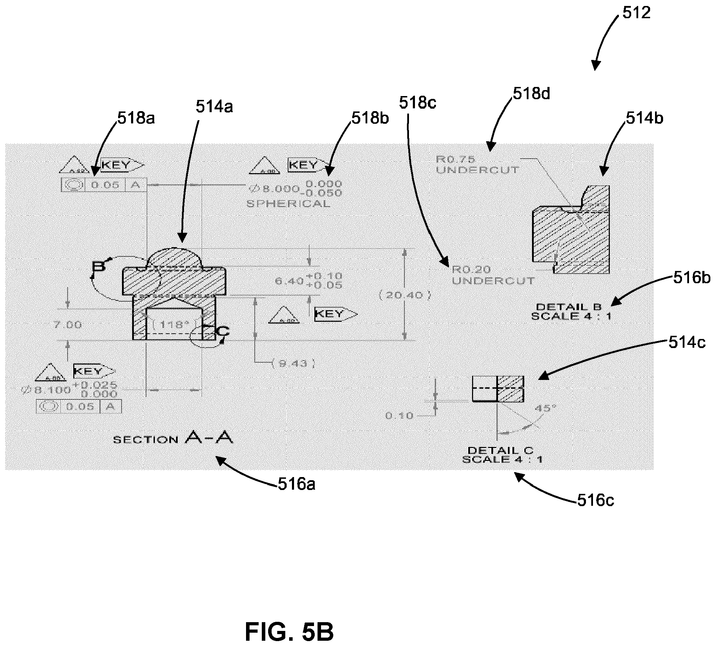

Referring now to FIG. 3, an example method 300 of generating a predictive model for predicting cost estimates of a manufactured component is shown in a flowchart diagram. To assist with the description of the method 300, reference will be made simultaneously to FIG. 5A, which is a schematic diagram 500 of data sources for training the predictive model, and FIG. 5B, which is an example of a portion of a component design model 512.

A component management system, such as component management system 110 having a processor 112 can be configured to implement method 300. In some embodiments, the predictive model 530 can be used in method 200 to predict a cost estimate of a query manufactured component. That is, the predictive model 530 can be generated before the component management system 110 is used to predict at least one cost estimate for a manufactured component. Although only one predictive model 530 is shown in FIG. 5A, it will be understood that more predictive models 530 can be provided to predict the at least one cost estimate. That is, the predictive model 530 can be separated into additional predictive models. For example, a predictive model can be provided for feature processing and a separate predictive model can be provided for feature classification. In another example, additional machine learning models can be provided for pre-processing features or reinforced learning.

Method 300 can begin at 302. The processor 112 can receive feature data associated with previously procured components. The feature data for each previously procured component can be representative of one or more features for that previously procured component.

In some embodiments, the feature data can be extracted from component design models 510 of the previously procured components. In at least one embodiment, the component design model 510 of one or more previously procured components include a three-dimensional computer-aided design model. In at least one embodiment, the component design model 510 of one or more previously procured components include mechanical and/or electrical drawings. For example, the component design models 510 can include image data. The image data can define a geometrical representation of the previously procured component.

As shown in the example component design model 512 of FIG. 5B, the geometrical representation can include a set of two-dimensional representations from different views 514a, 514b, and 514c (collectively referred to as 514). Furthermore, each two-dimensional representation of the set can have a similar size (e.g., similar pixels in length and width). In at least one embodiment (not shown in FIG. 5B), the geometrical representation can include a three-dimensional representation of the component and the processor 112 can generate the set of two-dimensional representations from the three-dimensional representation.

In at least one embodiment, the processor 112 can determine, based on the image data, a size (e.g., outer dimensions) for the previously procured component. In some embodiments, the processor 112 can determine a final volume for the previously procured component based on the size. In some embodiments, the processor 112 can determine a blank size for the previously procured component based on the size.

The component design models 510 can also include text data, such as but not limited to annotation data 516a, 516b, 516c, (collectively referred to as 516) or callout data 518a, 518b, 518c, 518d (collectively referred to as 518). The text data can define a physical property of the previously procured component. The text data can also define attributes of the component design model 510 itself, such as but not limited to drawing scale 516b, 516c, sheet number, total number of sheets, drawing by, plotted by, etc.

Physical properties of the components can include but are not limited to, a material type, a finish, a heat treatment, a number of weldments, a component type, a mass, a surface area, a machining tolerance, a surface smoothness, or a tread depth of the previously procured component, a number of holes, a number of unique holes, a number of cuts, a number of finished corners, a blank size, a final volume, and/or a number of markings.

In at least one embodiment, the processor 112 can parse the annotation data 516 to obtain at least one of a material type, a finish, a heat treatment, a number of weldments, a component type, a mass, a surface area, a machining tolerance, a surface smoothness, and/or a tread depth of the previously procured component. In at least one embodiment, the processor 112 can parse the callout data 518 to obtain at least one of a number of holes, a number of unique holes, a number of cuts, a number of finished corners, a blank size, a final volume, a number of markings of the previously procured component.

The text data can vary in the component design models 510. For example, one or more component design models 510 can include a mass while other component design models 510 may not. Likewise, one or more component design models 510 can include a final volume while other component design models 510 may not.

In at least one embodiment, the processor 112 can use the physical properties to further calculate numerical information (e.g., the volume of material removed, the final volume) and/or categorical information (e.g., the blank size). That is, the processor 112 can determine the blank size, the final volume, and/or the volume of material removed based on the image data as well as the text data. For example, the volume of material removed can depend on the general shape of the component as defined by the image data as well as the number of holes, the number of cuts, the number of finished corners, and the number of markings as defined by the text data. The volume of material removed can be determined based on the difference between the volume of the blank size and the final volume of the previously procured component.

In some embodiments, the processor 112 may not calculate the final volume based on the image data because the annotation data can define a final volume of the component. In some embodiments, the processor 112 can calculate the final volume based on the image data and compare the calculated final volume with final volume defined in the annotation data.

In some embodiments, the component design models 510 can be accessed and retrieved from data storage 116 or external data storage 130. In some embodiments, the component design models 510 can be received from computing device 120.

In some embodiments, component design models 510 for previously procured components in the order of tens of thousands are used to train the predictive model 530. Training the predictive model 530 with a large data set can improve the accuracy of the cost estimates generated by the predictive model 530. A more accurate cost estimate can reduce reliance on price quotes from vendors, and therefore reduce procurement time and costs for both vendor and customer.

At 304, the processor 112 can receive cost data associated with previously procured components. The cost data for each previously procured component can be representative of a unit cost for that previously procured component.

The processor 112 can extract the cost data from one or more procurement records 520 for the previously procured component. It will be appreciated that a previously procured component can be associated with multiple procurement records 520. That is, a previously procured component may have been procured multiple times. In at least one embodiment, the procurement records 520 can include previous price quotes that may not have been selected for a purchase order.

In some embodiments, the procurement records 520 can be accessed and retrieved from data storage 116 or external data storage 130. In some embodiments, the procurement records 520 can be received from computing device 120.

In some embodiments, the processor 112 can perform additional calculations to determine the unit cost of the previously procured components. For example, the processor 112 can adjust the unit cost indicated in the procurement records 520 to account for supplementary data including but not limited to inflation, commodity or material prices, shipping costs, currency rates, labor costs, and/or vendor load data.

Vendor load data can relate to the load of vendors. Vendors may increase prices when they have a large volume of orders and reduce prices when they have a small volume of orders. In another example, the processor 112 can determine that previously procured components were procured during period of a commodity shortage and abnormally high commodity prices. The processor 112 can adjust the unit cost indicated in the procurement records 520 to account for the abnormally high commodity prices.

In some embodiments, the processor 112 can retrieve supplementary data such as inflation data 540, commodity data 550, currency data 560, vendor load data 570, labor cost data 580, and/or shipping cost data 590 from data storage 116, external data storage 130, and/or computing device 120.

At 306, the processor 112 can determine a correlation between at least one feature of the previously procured components and the unit cost of the previously procured components. In at least one embodiment, the processor 112 can perform single feature analysis to determine whether a correlation between a feature and the unit cost exists.

For example, components manufactured with certain types of materials may be correlated with a higher cost. In some embodiments, the processor 112 can identify a plurality of correlations between feature data and cost data. To identify the plurality of correlations between feature data and cost data, the processor 112 can define a plurality of groups and assign each of the plurality of component design models 510 into one or more of the plurality of groups.

In at least one embodiment, the processor 112 can, for each previously procured component, identify a feature type associated with each feature data of the previously procured component. The processor 112 can assign the previously procured component to one or more feature groups having analogous features. For each feature group of the one or more feature groups, the processor 112 can determine an association between the feature data of the previously procured components assigned to the feature group and the unit cost. The processor 112 can determine whether the association satisfies a pre-determined criterion. If the association satisfies the pre-determined criterion, the processor 112 can identify the association as a correlation between the feature and the unit cost. That is, the processor 112 can identify the feature as a correlated feature.

For example, each of the component design models 510 can be assigned a material group or a material classification, such as aluminum, stainless, steel, plastic, weldment, or other. The unit cost of the components within each material group can be analyzed to determine the association between that material group and the unit cost. For example, a minimum unit cost, a maximum unit cost, a median unit cost, a standard deviation, and an average cost can be calculated for each material group.

In another example, each of the component design models 510 can be assigned a volume grouping or bin. The unit cost of the components with a volume within the range of the volume grouping can be analyzed to determine the association between the volume and the unit cost. In yet another example, the unit cost of the components within each material group can be further analyzed based on one or more additional features, such as the volume.

At 308, the processor 112 can train the predictive model 530 with the feature data and the cost data associated with previously procured components having the at least one correlated feature to predict a unit cost of a component.

In some embodiments, the processor 112 can further determine the at least one cost estimate for the query manufactured component based on a procurement attribute. To further determine the at least one cost estimates for a query manufactured component based on procurement attributes, the processor 112 can also perform single feature analysis to determine whether a correlation between a procurement attribute and the unit cost exists. That is, the processor 112 can determine a correlation between at least one procurement attribute of the previously procured components and the unit cost of the previously procured components.

The processor 112 can receive procurement data associated with previously procured components. In at least one embodiment, the processor 112 can extract procurement data from the procurement records 520. The procurement data can include at least one of a procured quantity, an order date, a delivery date, a vendor identifier, manufacturing location, and/or a delivery location. The procurement data for each previously procured component can be representative of one or more procurement attributes of the previously procured component.

The processor 112 can determine a correlation between at least one procurement attribute and the unit cost. The processor 112 can train the predictive model 530 with the procurement data and the cost data associated with previously procured components having the at least one procurement attribute to predict a unit cost of a component.

In some embodiments, the procurement records 520 can include a cost and can also include a vendor identifier, a lead time, a procured quantity of the component, a requisition size if the component was procured as a bundle order with other components, or a delivery time frame associated with the component design model 510 or any combination of these. The predictive model 530 can use the procurement data to more accurately determine the at least one cost estimate. For example, the unit cost of a component in a large quantity may be lower than the unit cost of the same component in a small quantity.

For example, if the procurement data relates to a procured quantity, the processor 112 can determine a procured quantity size from the procured quantity. The procured quantity size can allow for grouping of similarly sized purchase orders.

In another example, if the procurement data includes an order date and a delivery date, the processor 112 can determine a procurement lead time. The procurement lead time can be a difference between the order date and the delivery date. Furthermore, expedited orders can increase the at least one cost estimate.

In yet another example, if the procurement data includes a vendor identifier, the processor 112 can determine a geographical region of manufacture based on the vendor identifier. The geographical region of manufacture can allow for grouping of similarly located manufacturing locations.

In yet another example, if the procurement data includes a delivery location, the processor 112 can determine a procurement geographical delivery region from the delivery location. The geographical region of delivery can allow for grouping of similarly located delivery locations.

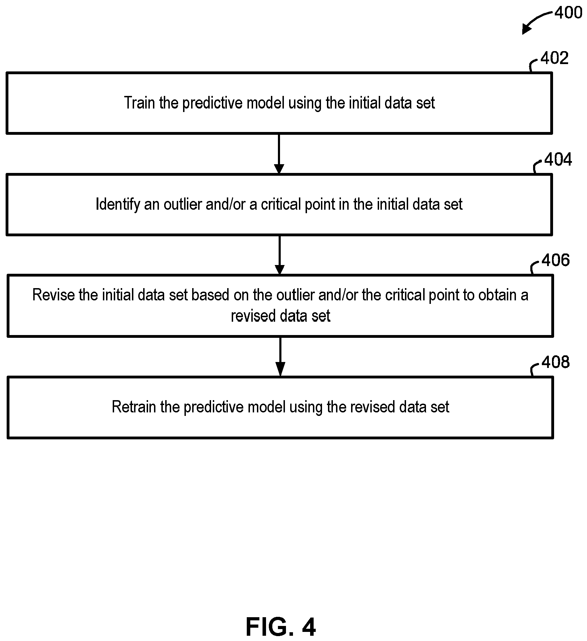

Referring now to FIG. 4, an example method 400 of training a predictive model to predict cost estimates of a manufactured component is shown in a flowchart diagram. In some embodiments, the method 400 can be used to train the predictive model 530 in method 300. That is, the predictive model 530 can be trained using method 400 before the component management system 110 is used to predict a cost estimate.

Method 400 can begin at 402. The processor 112 can train the predictive model 530 using an initial data set. The initial data set can include the feature data and the cost data associated with the previously procured components having the at least one correlated feature. The initial data set can be obtained from the plurality of component design models 510 and procurement records 520 associated with the plurality of design models. The initial data set can, for example, contain annotation data, callout data, feature data, or any combination thereof.

The processor 112 can determine an initial prediction accuracy indicator of the predictive model 530 trained using the initial data set at 402. In at least one embodiment, the processor 112 can proceed to 404 depending on the initial prediction accuracy indicator.

At 404, the processor 112 can identify a data outlier or a critical data point, or both, within the initial data set. Outliers can correspond to data points that deviate from the expected cost by a pre-determined threshold. In at least one embodiment, the pre-determined threshold can be about 10% of the expected cost. For example, an outlier can correspond to a previous ordered component that was misquoted or mispriced. Alternatively, data outliers can correspond to component design models 510 that contain insufficient data. In at least one embodiment, some outliers can be further analyzed. For example, outliers that deviate from the expected cost by a second pre-determined threshold, such as about 30% of the expected cost, can be considered large outliers and reviewed in greater detail.

Critical data points can refer to points in the distribution beyond which the cost prediction is less likely to be accurate. For example, the processor 112 can determine that prices associated with components that are larger than the critical point size experience large fluctuations and therefore, if used to predict the cost estimate of a manufactured component, may lead to an inaccurate prediction. Alternatively, the processor 112 can determine that the data set contains insufficient data relating to components of a certain mass, material, volume, or any other category of data.

At 406, the processor 112 can revise the data set based on the data outlier or the critical data point to obtain a revised data set.

In some embodiments, a data outlier can relate to a previously procured component. The processor 112 can identify feature data and cost data associated with the data outlier and remove, from the initial data set, the feature data and cost data associated with the data outlier.

For example, the processor 112 can identify a component design model 510 among the plurality of component design models 510 that corresponds to an outlier model and remove from the initial data set, data obtained from this outlier model. Upon identifying an outlier model, the processor 112 can remove annotation data, callout data and feature data obtained from the outlier model and procurement records associated with the outlier model. By removing data outliers from the training data set, the predictive model 530 can be trained to generate more accurate predictions.

In some embodiments, a critical data point can relate to feature data of previously procured components having a critical feature. The processor 112 can extract additional feature data associated with additional previously procured components, extract additional cost data from one or more procurement records for the additional previously procured components; and aggregate the additional feature data and additional cost data with the initial data set to obtain the revised data set.

For example, in response to identifying a critical data point within the initial data set, the processor 112 can obtain additional data from one or more additional component design models 510 and add to the initial data set, the additional data. The additional data can include at least a same data type as the critical data point. Upon identifying a critical point associated with components of a specific size, the processor 112 can identify additional component design models 510 corresponding to components of the same size and add the data associated with these component design models 510 to the training data set.

At 408, the processor 112 can retrain the predictive model 530 using the revised data set.

In at least one embodiment, the processor 112 can determine a revised prediction accuracy indicator of the predictive model 530 trained using the revised data set at 408. For example, upon revising the initial data set, the revised prediction accuracy indicator may be higher than the initial prediction accuracy indicator.

It will be appreciated that 406 and 408 can be iterative. For example, the processor 112 can revise the initial data set based on a first data outlier to obtain a first revised data set. The processor 112 can train the predictive model 530 using the first revised data set and determine a first revised prediction accuracy indicator of the predictive model 530. Depending on the first revised prediction accuracy indicator, the processor 112 reiterate 406 and 408. For example, the processor 112 can subsequently revise the first revised data set based on a second data outlier to obtain a second revised data set, train the predictive model 530 using the second revised data set, and determine a second revised prediction accuracy indicator of the predictive model 530. The processor 112 can iteratively revise the training data set until a sufficient prediction accuracy indicator is obtained. Furthermore, the predictive model 530 can be retrained as additional data becomes available.

In at least one embodiment, after the processor 112 determines the at least one cost estimate, the processor 112 can receive an actual price quote associated with the query manufactured component and update the predictive model 530 with the actual price quote. Updating the predictive model with an actual price quote can involve adding the actual price quote to the training data set to obtain a revised data set and retraining the predictive model 530 with the revised data set. That is, the actual price quote can added to the procurement records 520.

In some embodiments, the processor 112 can identify one or more previously procured components having features corresponding to the desired features for the query manufactured component as potential components corresponding to the query. The processor 112 can cause display, via the user interface, of a visual representation of the one or more potential components corresponding to the query. For example, several previously procured components may correspond to the query submitted by the user. The user interface may show component design models 510 of components that meet, or satisfy the query submitted by the user, allowing the user to view various options. Each of these component design models 510 may additionally be accompanied by a cost estimate.

In some embodiments, the processor 112 can recommend modifications to the query manufactured component that would reduce the cost. For example, a query can specify a particular dimension, material, or machining tolerance. However, a change in a particular dimension, a change in the type of material, or an increase in the machining tolerance may reduce the cost for the component. The processor 112 can recommend such changes. For example, the processor 112 can suggest changing the dimensions of the component, changing the material of the component to a less expensive material, changing the machining tolerance or any combination of these changes.

In at least one embodiment, the processor 112 can identify an alternative component having same desired features as the query manufactured component except one or more alternative features. The processor 112 can determine, using the predictive model, a cost estimate for the alternative component and cause display, via a user interface, of the alternative component and the cost estimate of the alternative component.

In some embodiments, alternative components can be offered to the user as substitutes that lower the cost estimate, or as upgrades that increase the cost estimate. The processor 112 can determine a difference between the cost estimate of the alternative component and each of the at least one cost estimates of the query component. In at least one embodiment, the processor 112 can offer upgraded components (e.g., query component with one or more upgraded features) when the increased cost is nominal, such as when the increased cost is less than a predetermined threshold.

For example, the processor 112 can determine that another material type that is similar to the desired material type can lower the cost. In another example, the query may define a desired machining tolerance and the processor 112 can determine that a higher machining tolerance can lower the cost. In yet another example, the processor 112 can determine that changing a particular dimension (e.g., length, width, or height) of the desired size can lower the cost.

In another example, the query may specify that the manufactured component should include material traceability. The processor 112 can determine that the cost estimate to manufacture the component without material traceability is lower and accordingly display the corresponding cost estimate as a substitute. Conversely, the query may specify that the manufactured component should not include material traceability. The processor 112 can determine that the cost estimate to manufacture the component with material traceability is nominally higher than the cost to manufacture the component without material traceability and accordingly offer material traceability as an upgrade.

In another example, the query may specify that the component should be manufactured by additive processes. The processor 112 can determine that the cost estimate to manufacture the component by subtractive processes is lower and accordingly display the corresponding cost estimate as a substitute. Similarly, the query may specify that the component should be manufactured by subtractive processes. The processor 112 can determine that the cost estimate to manufacture the component by additive processes is lower and accordingly display the corresponding cost estimate as a substitute.

In some embodiments, the processor 112 can determine, using the predictive model, an estimated delivery date of the query manufactured component; and cause display, via the user interface, of a timeline for delivery of the query manufactured component. In some embodiments, the processor 112 can recommend a vendor for manufacturing the query manufactured component based on at least one of a cost estimate for that vendor and/or the estimated delivery date for that vendor. For example, the predictive model 530 can predict the delivery date of the queried component based on the order date, delivery dates associated with similar previously procured components, and the vendor's load data. For example, the processor 112 can recommend a vendor that can provide the lowest cost. In another example, the processor 112 can also recommend a vendor, who despite not having the lowest cost, has an earlier delivery date (e.g., due to lower vendor load or closer location resulting in shorter delivery time). In another example, the processor 112 can recommend a vendor who has more experience with the type of component requested.

In some embodiments, the processor 112 can evaluate a confidence indicator, or the prediction accuracy indicator, for each of the at least one cost estimate and cause display, via the user interface, of the confidence indicators or the prediction accuracy indicators. For example, the confidence indicator may be expressed as a percentage. For example, the processor 112 can determine that the predictive model 530 is 80% confident about a particular cost estimate. A higher confidence indicator can be associated with components for which more data is available. For example, if the manufactured component requested is very similar to the feature data in the data set, the processor 112 may be more confident about the prediction. Conversely, a query manufactured component that shares few features with the data in the data set of the predictive model 530 may be associated with a lower confidence indicator. In some embodiments, the confidence indicator can be a standard deviation or confidence interval.

In at least one embodiment, the processor 112 can determine whether the predictive model 530 can predict the cost estimate for the query manufactured component based on the query. If the processor 112 determines that the predictive model cannot predict the cost estimate, the processor 112 can cause display, via the user interface, of a notification of a non-prediction. For example, the query may correspond to a query manufactured component that shares no similarities with the feature data in the training data set of the predictive model 530, in which case the predictive model 530 may not be capable of determining a prediction. Similarly, the query may include a component type or size and material that is incompatible.

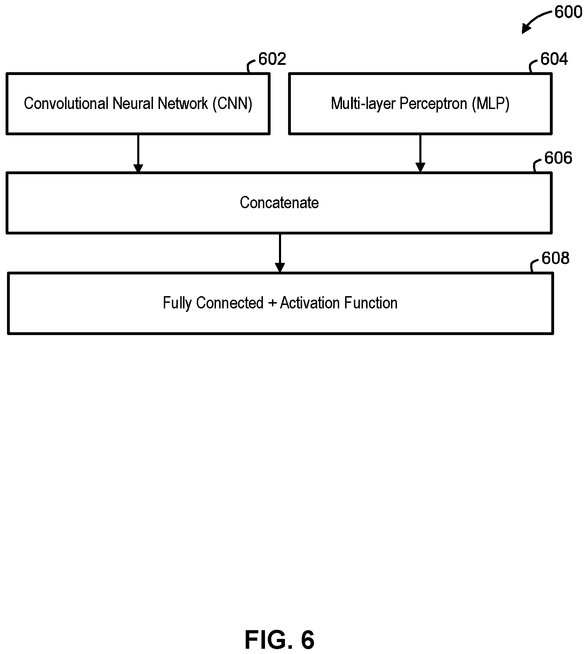

Referring now to FIG. 6, an example architecture 600 of the predictive model is shown. The predictive model 600 can include a convolutional neural network (CNN) 602 and a multi-layer perceptron (MLP) 604. The CNN 602 can receive image data extracted from the component design models 510 and generate a feature vector based on the image data. For example, the CNN 602 can receive image data defining a geometrical representation of the previously procured component and generate a feature vector representative of the size (e.g., outer dimensions) and shape of the component.

The MLP 604 can receive text data extracted from the component design model 510. The MLP 604 can also receive inflation data 540, commodity data 550, currency data 560, vendor load data 570, labor cost data 580, and shipping cost data 590. The MLP 604 can generate a feature vector representative of the physical properties of the component, the inflation data 540, commodity data 550, currency data 560, vendor load data 570, labor cost data 580, shipping cost data 590.

The features obtained by the CNN 602 and the MLP 604 can be concatenated together. The concatenated features can in turn, be used in a fully connected neural network 608 to predict the cost estimate of a manufactured component. The fully connected neural network 608 can also include an activation function. For example, the activation function can be a rectified linear unit (ReLU). Other activation functions are possible.

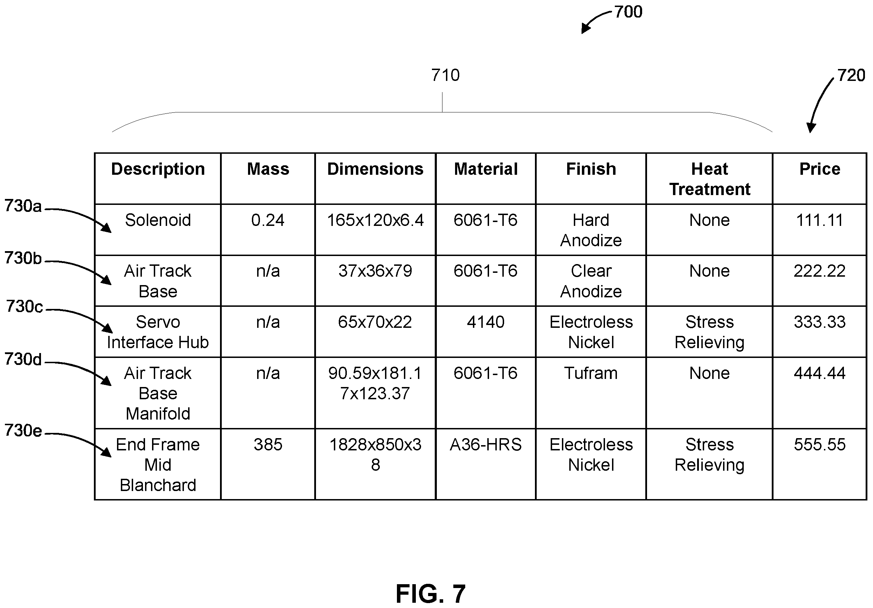

FIG. 7 shows a table 700 of example data that can be used in method 300 for generating the predictive model 530. As shown, feature data 710 that can be extracted from the component design models 510. For example, feature data 710 can include a component type (i.e., description) 710a, a mass 710b, a size (i.e., dimensions) 710c, a material type 710d, a finish 710e, and a heat treatment 710f. Procurement data 720, such as cost data, can be extracted from procurement records 520. Each line 730a-730e can, for example, be associated with a previously procured component. In some embodiments, supplementary data can also be associated with the feature data 710 and procurement data 720.

In some embodiments, the processor 112 can adjust the cost estimate to account for current labor cost data, current vendor loading data, current shipping cost data, and current commodity prices. For example, the processor 112 can determine that due to a recent raise in labor costs, the purchase cost estimate should be higher. Similarly, the processor 112 can modify the cost prediction based on the cost of labor in the region of manufacture requested.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling may be used to indicate that an element or device can electrically, optically, or wirelessly send data to another element or device as well as receive data from another element or device. Furthermore, the term "coupled" may indicate that two elements can be directly coupled to one another or coupled to one another through one or more intermediate elements.

It should be noted that terms of degree such as "substantially", "about" and "approximately" as used herein mean a reasonable amount of deviation of the modified term such that the end result is not significantly changed. These terms of degree may also be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

Furthermore, any recitation of numerical ranges by endpoints herein includes all numbers and fractions subsumed within that range (e.g. 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

The example embodiments of the systems and methods described herein may be implemented as a combination of hardware or software. In some cases, the example embodiments described herein may be implemented, at least in part, by using one or more computer programs, executing on one or more programmable devices comprising at least one processing element, and a data storage element (including volatile memory, non-volatile memory, storage elements, or any combination thereof). These devices may also have at least one input device (e.g. a pushbutton keyboard, mouse, a touchscreen, and the like), and at least one output device (e.g. a display screen, a printer, a wireless radio, and the like) depending on the nature of the device. The devices may also have at least one communication device (e.g., a network interface).

It should also be noted that there may be some elements that are used to implement at least part of one of the embodiments described herein that may be implemented via software that is written in a high-level computer programming language such as object oriented programming. Accordingly, the program code may be written in C, C++ or any other suitable programming language and may comprise modules or classes, as is known to those skilled in object oriented programming. Alternatively, or in addition thereto, some of these elements implemented via software may be written in assembly language, machine language or firmware as needed. In either case, the language may be a compiled or interpreted language.

At least some of these software programs may be stored on a storage media (e.g. a computer readable medium such as, but not limited to, ROM, magnetic disk, optical disc) or a device that is readable by a general or special purpose programmable device. The software program code, when read by the programmable device, configures the programmable device to operate in a new, specific and predefined manner in order to perform at least one of the methods described herein.

Furthermore, at least some of the programs associated with the systems and methods of the embodiments described herein may be capable of being distributed in a computer program product comprising a computer readable medium that bears computer usable instructions for one or more processors. The medium may be provided in various forms, including non-transitory forms such as, but not limited to, one or more diskettes, compact disks, tapes, chips, and magnetic and electronic storage.

The present invention has been described here by way of example only, while numerous specific details are set forth herein in order to provide a thorough understanding of the exemplary embodiments described herein. However, it will be understood by those of ordinary skill in the art that these embodiments may, in some cases, be practiced without these specific details. In other instances, well-known methods, procedures and components have not been described in detail so as not to obscure the description of the embodiments. Various modification and variations may be made to these exemplary embodiments without departing from the spirit and scope of the invention, which is limited only by the appended claims.

## Claims

1. A method for predicting a cost estimate of a query manufactured component, the method comprising operating at least one processor to:
receive a query defining desired features for the query manufactured component, the desired features comprising at least one of: a component type, a size, and a material for the query manufactured component;
determine, using a predictive model, at least one cost estimate for the query manufactured component based on the query; and
display, via a user interface, the at least one cost estimate for the query manufactured component.

2. The method of claim 1, wherein:
operating the at least one processor to determine, using a predictive model, at least one cost estimate for the query manufactured component based on the query comprises operating the at least one processor to:
assign the query manufactured component to a group of previously procured components having analogous features; and
determine the at least one cost estimate for the query manufactured component based on one or more correlations of the group of previously procured components having analogous features;
optionally,
operating the at least one processor to receive an actual price quote associated with the query manufactured component; and update the predictive model with the actual price quote; and/or
operating the at least one processor to identify one or more previously procured components having features corresponding to the desired features for the query manufactured component as potential components corresponding to the query; and display, via the user interface, a visual representation of the one or more potential components corresponding to the query.

3. The method of any one of claims 1 to 2, further comprising:
operating the at least one processor to:
receive feature data associated with previously procured components, the feature data for each previously procured component being representative of one or more features for that previously procured component;
receive cost data associated with the previously procured components, the cost data for each previously procured component being representative of a unit cost for that previously procured component;
determine a correlation between at least one feature and the unit cost; and
train the predictive model with the feature data and the cost data associated with previously procured components having the at least one correlated feature to predict a unit cost of a component;
optionally operating the at least one processor to determine a correlation between at least one correlated feature and the unit cost comprises operating the at least one processor to:
for each previously procured component:
identify a feature type associated with each feature data of the previously procured component; and
assign the previously procured component to one or more feature groups having analogous features; and
for each feature group of the one or more feature groups,
determine an association between the feature data of the previously procured components assigned to the feature group and the unit cost;
determine whether the association satisfies a pre-determined criterion; and
in response to the association satisfying the pre-determined criterion, identify the association as a correlation between the feature and the unit cost.

4. The method of claim 3, further comprising:
operating the at least one processor to extract the feature data from component design models of the previously procured components;
optionally wherein:
each of the component design models comprise image data defining a geometrical representation of the previously procured component; and operating the at least one processor to extract the feature data from the component design models comprises operating the at least one processor to determine a size for the previously procured component from the image data; and/or
each of the component design models comprise text data defining one or more physical properties of the previously procured component; and operating the at least one processor to extract the feature data from the component design models comprises operating the at least one processor to obtain at least one of a material type, a finish, a heat treatment, a number of weldments, a component type, a mass, a surface area, a machining tolerance, a surface smoothness, a tread depth, a number of holes, a number of unique holes, a number of cuts, a number of finished corners, a blank size, a final volume, a number of markings, or a manufacturing process for the previously procured component from the text data.

5. The method of any one of claims 3 to 4, wherein:
operating the at least one processor to train the predictive model based on the feature data and the cost data associated with the previously procured components having the at least one type of feature comprises operating the at least one processor to:
train the predictive model using an initial data set, the initial data set comprising the feature data and the cost data associated with the previously procured components having the at least one correlated feature;
identify at least one of a data outlier or a critical data point within the initial data set;
revise the initial data set based on the data outlier or the critical data point to obtain a revised data set; and
retrain the predictive model using the revised data set;
optionally,
operating the at least one processor to:
determine an initial prediction accuracy indicator of the predictive model based on the initial data set; and
determine a revised prediction accuracy indicator of the predictive model based on the revised data set; and/or
wherein the data outlier comprises a previously procured component of the previously procured components; and operating the at least one processor to revise the initial data set comprises operating the at least one processor to, in response to identifying a data outlier within the initial data set:
identify feature data and cost data associated with the previously procured component identified as a data outlier; and
remove, from the initial data set, the feature data and cost data associated with the data outlier; and/or
wherein the critical data point comprises feature data of previously procured components having a critical feature; and operating the at least one processor to revise the initial data set comprises operating the at least one processor to, in response to identifying a critical data point within the initial data set:
extract additional feature data associated with additional previously procured components having the critical feature;
extract additional cost data from one or more procurement records for the additional previously procured components; and
aggregate the additional feature data and additional cost data with the initial data set to obtain the revised data set; and/or

6. The method of any one of claims 3 to 5, wherein:
the query further comprises one or more procurement attributes, the one or more procurement attributes comprising at least one of a desired quantity size, a desired lead time, or a desired geographical delivery region; and
operating the at least one processor to determine the at least one cost estimate for the query manufactured component based on the query is further based on the one or more procurement attributes;
optionally, the method further comprises operating the at least one processor to:
receive procurement data associated with previously procured components, the procurement data for each previously procured component being representative of one or more procurement attributes of the previously procured component;
determine a correlation between at least one procurement attribute and the unit cost; and
train the predictive model with the procurement data and the cost data associated with previously procured components having the at least one procurement attribute to predict a unit cost of a component;
further optionally, the method further comprises operating the at least one processor to:
extract the procurement data and the cost data from one or more procurement records for the previously procured component, the procurement data comprises at least one of a procured quantity, an order date, a delivery date, a vendor identifier, or a delivery location;
in response to the procurement data comprising a procured quantity, determine a procured quantity size from the procured quantity;
in response to the procurement data comprising an order date and a delivery date, determine a procurement lead time;
in response to the procurement data comprising a vendor identifier, determine a geographical region of manufacture from the vendor identifier; and
in response to the procurement data comprising a delivery location, determine a procurement geographical delivery region from the delivery location.

7. The method of any one of claims 1 to 6, further comprising:
operating the at least one processor to:
identify an alternative component having same desired features as the query manufactured component except one or more alternative features;
determine, using the predictive model, a cost estimate for the alternative component; and
display, via the user interface, the alternative component and the cost estimate of the alternative component;
optionally wherein:
in response to the cost estimate for the alternative component being lower than each of the at least one cost estimates for the query manufactured component, operating the at least one processor to display the alternative component as a substitute component;
otherwise, in response to a difference between the cost estimate of the alternative component and a cost estimate of the query manufactured component being less than a pre-determined threshold, operating the at least one processor to display the alternative component as an upgraded component.

8. The method of any one of claims 1 to 7, further comprising:
operating the at least one processor to:
receive supplementary data comprising at least one of inflation data, commodity cost data, labor cost data, currency data, vendor load data, or shipping cost data; and
determine at least one updated cost estimate based on the supplementary data; and/or
operating the at least one processor to:
evaluate a confidence indicator for each of the at least one cost estimates; and
display, via the user interface, the confidence indicators; and/or.
operating the at least one processor to:
determine whether the predictive model can predict the at least one cost estimate for the query manufactured component based on the query; and
in response to the predictive model being unable to predict the at least one cost estimate, display, via the user interface, a notification of a non-prediction.

9. A system for predicting a cost estimate of a query manufactured component, the system comprising:
at least one processor operable to:
receive a query defining desired features for the query manufactured component, the desired features comprising at least one of: a component type, a size, and a material for the query manufactured component; and
determine, using a predictive model, at least one cost estimate for the query manufactured component based on the query; and
a user interface in communication with the at least one processor, the at least one user interface configured to display the at least one cost estimate for the query manufactured component.

10. The system of claim 9, wherein:
the at least one processor operable to determine, using a predictive model, at least one cost estimate for the query manufactured component based on the query comprises the at least one processor being operable to:
assign the query manufactured component to a group of previously procured components having analogous features; and
determine the at least one cost estimate for the query manufactured component based on one or more correlations of the group of previously procured components having analogous features;
optionally,
the at least one processor is further operable to receive an actual price quote associated with the query manufactured component; and update the predictive model with the actual price quote; and/or
the at least one processor is further operable to identify one or more previously procured components having features corresponding to the desired features for the query manufactured component as potential components corresponding to the query; and the user interface is further configured to display a visual representation of the one or more potential components corresponding to the query.

11. The system of any one of claims 9 to 10, wherein:
the at least one processor is further operable to:
receive feature data associated with previously procured components, the feature data for each previously procured component being representative of one or more features for that previously procured component;
receive cost data associated with the previously procured components, the cost data for each previously procured component being representative of a unit cost for that previously procured component;
determine a correlation between at least one feature and the unit cost; and
train the predictive model with the feature data and the cost data associated with previously procured components having the at least one correlated feature to predict a unit cost of a component;
optionally the at least one processor operable to determine a correlation between at least one correlated feature and the unit cost comprises the at least one processor being operable to:
for each previously procured component:
identify a feature type associated with each feature data of the previously procured component; and
assign the previously procured component to one or more feature groups having analogous features; and
for each feature group of the one or more feature groups,
determine an association between the feature data of the previously procured components assigned to the feature group and the unit cost;
determine whether the association satisfies a pre-determined criterion; and
in response to the association satisfying the pre-determined criterion, identify the association as a correlation between the feature and the unit cost.

12. The system of claim 11, wherein:
the at least one processor is further operable to extract the feature data from component design models of the previously procured components;
optionally,
each of the component design models comprise image data defining a geometrical representation of the previously procured component; and the at least one processor operable to extract the feature data from the component design models comprises the at least one processor being operable to determine a size, for the previously procured component from the image data; and/or
each of the component design models comprise text data defining one or more physical properties of the previously procured component; and the at least one processor operable to extract the feature data from the component design models comprises the at least one processor being operable to obtain at least one of a material type, a finish, a heat treatment, a number of weldments, a component type, a mass, a surface area, a machining tolerance, a surface smoothness, a tread depth, a number of holes, a number of unique holes, a number of cuts, a number of finished corners, a blank size, a final volume, a number of markings, or a manufacturing process for the previously procured component from the text data.

13. The system of any one of claims 11 to 12, wherein:
the at least one processor operable to train the predictive model based on the feature data and the cost data associated with the previously procured components having the at least one type of feature comprises the at least one processor being operable to:
train the predictive model using an initial data set, the initial data set comprising the feature data and the cost data associated with the previously procured components having the at least one correlated feature;
identify at least one of a data outlier or a critical data point within the initial data set;
revise the initial data set based on the data outlier or the critical data point to obtain a revised data set; and
retrain the predictive model using the revised data set;
optionally,
the at least one processor is further operable to:
determine an initial prediction accuracy indicator of the predictive model based on the initial data set; and
determine a revised prediction accuracy indicator of the predictive model based on the revised data set; and/or
the data outlier comprises a previously procured component of the previously procured components; and the at least one processor operable to revise the initial data set comprises the at least one processor being operable to, in response to identifying a data outlier within the initial data set:
identify feature data and cost data associated with the previously procured component identified as a data outlier; and
remove, from the initial data set, the feature data and cost data associated with the data outlier; and/or
the critical data point comprises feature data of previously procured components having a critical feature; and the at least one processor operable to revise the initial data set comprises the at least one processor being operable to, in response to identifying a critical data point within the initial data set:
extract additional feature data associated with additional previously procured components having the critical feature;
extract additional cost data from one or more procurement records for the additional previously procured components; and
aggregate the additional feature data and additional cost data with the initial data set to obtain the revised data set; and/or

14. The system of any one of claims 11 to 13, wherein:
the query further comprises one or more procurement attributes, the one or more procurement attributes comprising at least one of a desired quantity size, a desired lead time, or a desired geographical delivery region; and
wherein the at least one processor operable to determine the at least one cost estimate for the query manufactured component based on the query is further based on the one or more procurement attributes;
optionally, the at least one processor is further operable to:
receive procurement data associated with previously procured components, the procurement data for each previously procured component being representative of one or more procurement attributes of the previously procured component;
determine a correlation between at least one procurement attribute and the unit cost; and
train the predictive model with the procurement data and the cost data associated with previously procured components having the at least one procurement attribute to predict a unit cost of a component.
further optionally, wherein the at least one processor is further operable to:
extract the procurement data and the cost data from one or more procurement records for the previously procured component, the procurement data comprises at least one of a procured quantity, an order date, a delivery date, a vendor identifier, or a delivery location;
in response to the procurement data comprising a procured quantity, determine a procured quantity size from the procured quantity;
in response to the procurement data comprising an order date and a delivery date, determine a procurement lead time;
in response to the procurement data comprising a vendor identifier, determine a geographical region of manufacture from the vendor identifier; and
in response to the procurement data comprising a delivery location, determine a procurement geographical delivery region from the delivery location.

15. The system of any one of claims 9 to 14, wherein:
the at least one processor is further operable to:
identify an alternative component having same desired features as the query manufactured component except one or more alternative features;
determine, using the predictive model, a cost estimate for the alternative component; and
display, via the user interface, the alternative component and the cost estimate of the alternative component;
optionally, wherein:
in response to the cost estimate for the alternative component being lower than each of the cost estimates for the query manufactured component, the at least one processor is operable to display the alternative component as a substitute component;
otherwise, in response to a difference between the cost estimate of the alternative component and a cost estimate of the query manufactured component being less than a pre-determined threshold, the at least one processor is operable to display the alternative component as an upgraded component.
